# EUROPEAN PATENT APPLICATION

(11) **EP 4 181 262 A1**
(43) Date of publication of application: **17.05.2023**
(21) Application number: 21906810.3
(22) Date of filing: 14.10.2021
(51) Int. Cl.: H01M 10/0562

(54) **SOLID ELECTROLYTE AND SOLID-STATE BATTERY COMPRISING SAME**

(30) Priority: 14.12.2020 KR 20200174457
(71) Applicant: Korea Electronics Technology Institute, Bundang-gu, Seongnam-si Gyeonggi-do 13509 (KR)
(72) Inventor: CHO, Woo Suk, Seongnam-si Gyeonggi-do 13599 (KR); KIM, Kyung Su, Seongnam-si, Gyeonggi-do 13560 (KR); YU, Ji Sang, Seongnam-si Gyeonggi-do 13600 (KR); JEONG, Goo Jin, Seongnam-si Gyeonggi-do 13599 (KR); PARK, Keon Ho, Seongnam-si Gyeonggi-do 13584 (KR)
(74) Representative: Isarpatent
(86) International application number: PCT/KR2021/014159
(87) International publication number: WO 2022/131505

(57) **Abstract**

The present invention relates to: a solid electrolyte having satisfactory moisture stability and ion conductivity through activation energy improvement; and a solid-state battery comprising same. The present invention provides a solid electrolyte for a solid-state battery, comprising an oxysulfide-based compound represented by the following chemical formula. [Chemical formula] LiₐM_{b}P_{c}S_{d}OₑX_{f} (5≤a≤7, 0<b≤1, 0≤ c<1, 2.5≤d≤5, 0<e≤2, 1<f≤1.5, M is at least one selected from the group consisting of Si, Ti, Ta, Nb, As, Sb, Sn and Al, and X is at least one selected from the group consisting of Cl, Br, I and F.)

## Description

### [Technical Field]

The present invention relates to a solid-state battery. More particularly, the present invention relates to an oxysulfide solid electrolyte in which an anion of a conventional sulfide solid electrolyte is partially replaced with oxygen to improve ionic conductivity and moisture stability, and to a solid-state battery including the oxysulfide solid electrolyte.

### [Background Art]

As the demand for electric vehicles and large-capacity power storage devices increases, various batteries have been developed to meet the increasing demand.

Among various secondary batteries, a lithium secondary battery has been widely commercialized because of its excellent energy density and output characteristics. Mainly used as the lithium secondary battery is a lithium secondary battery (hereinafter, referred to as a `liquid-type secondary battery') including a liquid-type electrolyte containing an organic solvent.

However, the liquid electrolyte itself in the liquid-type secondary battery is a flammable material, so there is a risk of ignition when damaged by internal and external shocks or the like. In order to solve such problems of the liquid-type secondary battery, a lithium secondary battery (hereinafter referred to as a 'solid-state battery') using a solid electrolyte having excellent stability is attracting attention.

A sulfide-based solid electrolyte with soft powder has excellent contact characteristics between particles even when pressurized at room temperature without a sintering process. Compared to the oxide-based solid electrolyte, the sulfide-based solid electrolyte has a low contact resistance and can exhibit high ionic conductivity, which is attracting attention.

However, the sulfide-based solid electrolyte has relatively lower chemical stability than the oxide-based solid electrolyte, so the operation of the solid-state battery is not stable. That is, the sulfide-based solid electrolyte is likely to react with moisture in the atmosphere or moisture introduced in the process due to various factors such as residual L₂S or P₂S₇ crosslinking sulfur included in the structure. Because of this, the sulfide-based solid electrolyte may generate hydrogen sulfide (H₂S) gas through reaction with moisture, so it is handled in an argon gas atmosphere glove box or a dry room with moisture removed. In addition, the high reactivity of the sulfide-based solid electrolyte with moisture and the generation of hydrogen sulfide gas cause problems in the manufacturing process, such as a decrease in ionic conductivity.

As such, the sulfide-based solid electrolyte requires difficult handling conditions, so it is acting as a disadvantage in manufacturing processability for the large-area and mass production of the solid-state battery using the sulfide-based solid electrolyte.

### [Related Art Documents]

### [Patent Documents]

(Patent Document 1) Korean Patent Publication No. 2019-0079135 (published on July 5, 2019)

### [Disclosure]

### [Technical Problem]

Accordingly, an object of the present invention is to provide a solid electrolyte containing an oxysulfide-based compound having high ionic conductivity and excellent stability in a moisture environment of the atmosphere, and a solid-state battery including the same.

Another object of the present invention is to provide a solid electrolyte containing an oxysulfide-based compound capable of reducing the generated amount of hydrogen sulfide (H₂S) gas when exposed to the atmosphere, and a solid-state battery including the same.

Still another object of the present invention is to provide a solid electrolyte containing an oxysulfide-based compound capable of suppressing a decrease in ionic conductivity even after exposure to the atmosphere, and a solid-state battery including the same.

### [Technical Solution]

In order to accomplish the above objects, the present invention provides a solid electrolyte for a solid-state battery including an oxysulfide-based compound represented by the following chemical formula.

[Chemical Formula] LiₐM_{b}P_{c}S_{d}OₑX_{f}

(5≤a≤7, 0<b≤1, 0≤c<1, 2.5≤d≤5, 0<e≤2 and 1<f≤1.5,
M is one or more selected from the group consisting of Si, Ti, Ta, Nb, As, Sb, Sn and Al, and
X is one or more selected from the group consisting of Cl, Br, I and F.)

The oxysulfide-based compound includes an argyrodite crystal structure.

The M is Si, and the X includes Cl and optionally further includes Br.

The content of Cl may be higher than the content of Br.

The lattice constant of the oxysulfide-based compound increases as the content of Cl is constant and the content of Br increases.

When the X is Cl, the lattice constant of the oxysulfide-based compound decreases as the content of Cl increases.

In the above, a, b, c, d, and e may be 5.6≤a≤6, 0.1≤b≤0.3, 0.7≤c≤1, 4≤d≤5, 0<e≤0.6, and 1<f≤1.5, respectively.

The generated amount of hydrogen sulfide gas decreases as the content of X increases.

Compared to the solid electrolyte of Li_{6.1}Si_{0.1}P_{0.9}S_{4.8}O_{0.2}Cl, the oxysulfide-based compound has a lower activation energy.

The oxysulfide-based compound may have an activation energy of 0.34 to 0.41 eV.

Compared to the solid electrolyte of Li₂M_{b}Pₑ₁S_{d}OₑX (0≤c1≤1), the oxysulfide-based compound has a higher ionic conductivity after exposure to the atmosphere.

The ionic conductivity of the oxysulfide-based compound is 1.54 to 2.58 mS/cm before exposure to the atmosphere and 0.49 to 0.97 mS/cm after exposure to the atmosphere at room temperature.

In addition, the present invention provides a solid-state battery including the oxysulfide-based compound represented by the above chemical formula.

### [Advantageous Effects]

The solid electrolyte containing the oxysulfide-based compound according to the present invention can provide excellent stability in a moisture environment of the atmosphere and improved ionic conductivity. In addition, it is possible to improve activation energy and thereby provide improved ionic conductivity.

The solid electrolyte containing the oxysulfide-based compound according to the present invention can reduce the generated amount of hydrogen sulfide (H₂S) gas even when exposed to the atmosphere because of improved water stability. Therefore, the solid electrolyte according to the present invention can suppress a decrease in ionic conductivity even after exposure to the atmosphere.

### [Description of Drawings]

FIG. 1 is a graph showing lattice constants calculated from XRD patterns of solid electrolytes according to embodiments and comparative examples.
FIG. 2 is a graph showing the generated amount of hydrogen sulfide when solid electrolytes according to embodiments and comparative examples are exposed to the atmosphere.
FIG. 3 is a graph showing activation energies of solid electrolytes according to embodiments and comparative examples.
FIG. 4 is a graph showing changes in ionic conductivity of solid electrolytes according to embodiments and comparative examples before and after exposure to the atmosphere.

### [Mode for Disclosure]

In the following description, only parts necessary to understand embodiments of the present invention will be described, and other parts will not be described to avoid obscuring the subject matter of the present invention.

Terms used herein should not be construed as being limited to their usual or dictionary meanings. In view of the fact that the inventor can appropriately define the meanings of terms in order to describe his/her own invention in the best way, the terms should be interpreted as meanings consistent with the technical idea of the present invention. In addition, the following description and corresponding drawings merely relate to specific embodiments of the present invention and do not represent all the subject matter of the present invention. Therefore, it will be understood that there are various equivalents and modifications of the disclosed embodiments at the time of the present application.

Now, embodiments of the present invention will be described in detail with reference to the accompanying drawings.

A solid electrolyte for a solid-state battery according to the present invention includes an oxysulfide-based compound represented by the following chemical formula.

[Chemical Formula] LiₐM_{b}P_{c}S_{d}OₑX_{f}

(5≤a≤7, 0<b≤1, 0≤c<1, 2.5≤d≤5, 0<e≤2 and 1<f≤1.5,
M is one or more selected from the group consisting of Si, Ti, Ta, Nb, As, Sb, Sn and Al, and
X is one or more selected from the group consisting of Cl, Br, I and F.)

The oxysulfide-based compound according to the present invention may have an amorphous structure, a crystalline structure, or a mixture thereof. The oxysulfide-based compound according to the present invention may include a crystal phase having an argyrodite crystal structure.

Because the azirodite crystal structure is widely known in the art, a detailed description thereof will be omitted. The solid electrolyte according to the present invention including the azirodite crystal structure can have high ionic conductivity.

The oxysulfide-based compound according to the present invention has a form in which Si is substituted at least in part at the P position of Li₆PS₅X and, if necessary, a part of O and X is substituted at the S position.

Here, b and c may be b+c=1, and d, e and f may be d+e+f=6.

In the oxysulfide-based compound according to the present invention, M may be Si, and X may include Cl and may further include Br.

Here, the content of Cl may be higher than the content of Br.

The lattice constant of the oxysulfide-based compound increases as the content of Cl is constant and the content of Br increases. The increase in the lattice constant is because Br, which has a larger ionic radius than S, is employed inside the structure of the oxysulfide-based compound.

When X is Cl, the lattice constant of the oxysulfide-based compound decreases as the content of Cl increases. The decrease in the lattice constant is because Cl, which has a smaller ionic radius than S, is employed inside the structure of the oxysulfide-based compound.

Preferably, a, b, c, d, and e may be 5.6≤a≤6, 0.1≤b≤0.3, 0.7≤c<1, 4≤d≤5, 0<e≤0.6, and 1<f≤1.5, respectively.

In the oxysulfide-based compound according to the present invention, the generated amount of hydrogen sulfide gas decreases as the content of X increases.

Compared to the solid electrolyte of Li_{6.1}Si_{0.1}P_{0.9}S_{4.8}O_{0.2}Cl, the oxysulfide-based compound according to the present invention has a lower activation energy.

Compared to the solid electrolyte of Li₂M_{b}Pₑ₁S_{d}OₑX (0≤c1≤1), the oxysulfide-based compound according to the present invention has a higher ionic conductivity and a lower generated amount of hydrogen sulfide gas after exposure to the atmosphere.

As such, the solid electrolyte according to the present invention provides excellent stability in a moisture environment of the atmosphere. In addition, it is possible to improve activation energy and thereby provide improved ionic conductivity.

The solid electrolyte according to the present invention can reduce the generated amount of hydrogen sulfide (H₂S) gas even when exposed to the atmosphere because of improved water stability. Therefore, the solid electrolyte according to the present invention can suppress a decrease in ionic conductivity even after exposure to the atmosphere.

The solid electrolyte according to the present invention may be included in at least one of a positive electrode, a negative electrode, and a solid electrolyte membrane.

A solid-state battery including the solid electrolyte according to the present invention is provided.

As described above, the solid electrolyte according to the present invention includes the oxysulfide-based compound, thereby not only having high ionic conductivity, but also minimizing the generation rate and amount of hydrogen sulfide gas when exposed to the atmosphere. Therefore, the solid-state battery including the solid electrolyte according to the present invention has excellent water stability and safety, thereby allowing large-area and mass-production and having excellent manufacturing processability.

This solid-state battery includes a positive electrode, a negative electrode, and a solid electrolyte membrane interposed between the positive electrode and the negative electrode.

### [Embodiments and Comparative Examples]

In order to confirm the water stability, activation energy, and ionic conductivity of the solid electrolyte according to the present invention, solid electrolytes according to embodiments and comparative examples were prepared as follows. The lattice constant of the prepared solid electrolyte, the generated amount of hydrogen sulfide when exposed to the atmosphere, the activation energy, and the ionic conductivity before and after exposure to the atmosphere were measured and compared. Meanwhile, the ionic conductivity may have a difference in measured value depending on the sampling and measurement schemes. In addition, the ionic conductivity may vary depending on the experimental conditions. For example, the measurement of the ionic conductivity may differ depending on the pressurization conditions of the sample, the ionic conductivity measurement cell and equipment. Therefore, the measured ionic conductivity in Table 1 below is only an example, and the present invention is not limited thereto.

The compositions of the solid electrolytes according to comparative examples and embodiments are shown in Table 1 below.

**[Table 1]**

| | Composition | Li | M(Si) | P | S | O | X(Cl, Br) |
|---|---|---|---|---|---|---|---|
| Compar. Ex. 1 | Li₆PS₅Cl | 6 | 0 | 1 | 5 | 0 | 1(Cl) |
| Compar. Ex. 2 | Li_{6.1}Si_{0.1}P_{0.9}S₅Cl | 6.1 | 0.1 | 0.9 | 5 | 0 | 1(Cl) |
| Compar. Ex. 3 | Li_{6.1}Si_{0.1}P_{0.9}S_{4.8}O_{0.2}Cl | 6.1 | 0.1 | 0.9 | 4.8 | 0.2 | 1(Cl) |
| Embodiment 1 | Li₆Si_{0.1}P_{0.9}S_{4.7}O_{0.2}ClBr_{0.1} | 6 | 0.1 | 0.9 | 4.7 | 0.2 | 1(Cl), 0.1(Br) |
| Embodiment 2 | Li_{5.9}Si_{0.1}P_{0.9}S_{4.6}O_{0.2}ClBr_{0.2} | 5.9 | 0.1 | 0.9 | 4.6 | 0.2 | 1(C1), 0.2(Br) |
| Embodiment 3 | Li_{5.8}Si_{0.1}P_{0.9}S_{4.5}O_{0.2}ClBr_{0.3} | 5.8 | 0.1 | 0.9 | 4.5 | 0.2 | 1(C1), 0.3(Br) |
| Embodiment 4 | Li_{5.7}Si_{0.1}P_{0.9}S_{4.4}O_{0.2}ClBr_{0.4} | 5.7 | 0.1 | 0.9 | 4.4 | 0.2 | 1(C1), 0.4(Br) |
| Embodiment 5 | Li_{5.6}Si_{0.1}P_{0.9}S_{4.3}O_{0.2}ClBr_{0.5} | 5.6 | 0.1 | 0.9 | 4.3 | 0.2 | 1(C1), 0.5(Br) |
| Embodiment 6 | Li₆Si_{0.1}P_{0.9}S_{4.7}O_{0.2}Cl_{1.1} | 6 | 0.1 | 0.9 | 4.7 | 0.2 | 1.1 (Cl) |
| Embodiment 7 | Li_{5.9}Si_{0.1}P_{0.9}S_{4.6}O_{0.2}Cl_{1.2} | 5.9 | 0.1 | 0.9 | 4.6 | 0.2 | 1.2(Cl) |
| Embodiment 8 | Li_{5.8}Si_{0.1}P_{0.9}S_{4.5}O_{0.2}Cl_{1.3} | 5.8 | 0.1 | 0.9 | 4.5 | 0.2 | 1.3 (Cl) |
| Embodiment 9 | Li_{5.7}Si_{0.1}P_{0.9}S_{4.4}O_{0.2}Cl_{1.4} | 5.7 | 0.1 | 0.9 | 4.4 | 0.2 | 1.4(Cl) |

The solid electrolytes according to comparative examples and embodiments are oxysulfide-based compounds.

All experiments including preparation of solid electrolytes according to comparative examples and embodiments were performed in a glove box or dry room not exposed to moisture.

### [Comparative Example 1: Preparation of Li₆PS₅Cl]

Materials were synthesized so that the composition of the solid electrolyte was Li₆PS₅Cl (LPSCL). As starting materials, Li₂S, P₂S₅, and LiCl were used. After weighing and mixing the starting materials based on 10 g of the synthesized amount of the solid electrolyte, a milling process was performed at 350 rpm for 2 hours.

After recovered, the mixture was processed into pellets through compression with a hydraulic press, then placed in a quartz tube and sealed in a vacuum state for heat treatment in a vacuum atmosphere. The temperature was raised to 550°C at a heating rate of 2°C per minute, maintained for 6 hours, and then cooled naturally. Then, the heat-treated pellet sample was pulverized to obtain a powdered solid electrolyte according to the comparative example 1.

It was confirmed that the ionic conductivity of the solid electrolyte according to the comparative example 1 was 1.6 mS/cm, which was realized as that of a conventional LPSCL.

### [Comparative Example 2: Preparation of Li_{6.1}Si_{0.1}P_{0.9}S₅Cl]

Material synthesis was performed so that the composition of the solid electrolyte was Li_{6.1}Si_{0.1}P_{0.9}S₅Cl. The same Li₂S, P₂S₅, and LiCl as in the comparative example 1 were used as starting materials, and Si and S were additionally used for Si substitution. The starting materials were put into a milling container and mixed uniformly by performing mixing at 350 rpm for 2 hours or more.

After recovered, the mixture was processed into pellets through compression with a hydraulic press, then placed in a quartz tube and sealed in a vacuum state for heat treatment in a vacuum atmosphere. The temperature was raised to 570°C at a heating rate of 2°C per minute, maintained for 18 hours, and then cooled naturally.

Then, the heat-treated pellet sample was pulverized to obtain a powdered solid electrolyte according to the comparative example 2.

### [Comparative Example 3: Preparation of Li_{6.1}Si_{0.1}P_{0.9}S_{4.8}O_{0.2}Cl]

Material synthesis was performed so that the composition of the solid electrolyte was Li_{6.1}Si_{0.1}P_{0.9}S_{4.8}O_{0.2}Cl. The same Li₂S, P₂S₅, and LiCl as in the comparative example 1 were used as starting materials, and SiO₂ was additionally used. The starting materials were put into a milling container and mixed uniformly by performing mixing at 350 rpm for 2 hours or more.

After recovered, the mixture was processed into pellets through compression with a hydraulic press, then placed in a quartz tube and sealed in a vacuum state for heat treatment in a vacuum atmosphere. The temperature was raised to 570°C at a heating rate of 2°C per minute, maintained for 18 hours, and then cooled naturally.

Then, the heat-treated pellet sample was pulverized to obtain a powdered solid electrolyte according to the comparative example 3.

### [Embodiment 1: Preparation of Li₆Si_{0.1}P_{0.9}S_{4.7}O_{0.2}ClBr_{0.1}]

Material synthesis was performed so that the composition of the solid electrolyte was Li₆Si_{0.1}P_{0.9}S_{4.7}O_{0.2}ClBr_{0.1}. The same Li₂S, P₂S₅, and LiCl as in the comparative example 1 were used as starting materials, and SiO₂ and LiBr were additionally used. The starting materials were put into a milling container and mixed uniformly by performing mixing at 350 rpm for 2 hours or more.

After recovered, the mixture was processed into pellets through compression with a hydraulic press, then placed in a quartz tube and sealed in a vacuum state for heat treatment in a vacuum atmosphere. The temperature was raised to 510°C at a heating rate of 2°C per minute, maintained for 18 hours, and then cooled naturally.

Then, the heat-treated pellet sample was pulverized to obtain a powdered solid electrolyte according to the embodiment 1.

### [Embodiment 2: Preparation of Li_{5.9}Si_{0.1}P_{0.9}S_{4.6}O_{0.2}ClBr_{0.2}]

Preparation was carried out under the same conditions as in the embodiment 1 except that the ratio of the starting materials was changed so that the composition of the solid electrolyte was Li_{5.9}Si_{0.1}P_{0.9}S_{4.6}O_{0.2}ClBr_{0.2}.

### [Embodiment 3: Preparation of Li_{5.8}Si_{0.1}P_{0.9}S_{4.5}O_{0.2}ClBr_{0.3}]

Preparation was carried out under the same conditions as in the embodiment 1 except that the ratio of the starting materials was changed so that the composition of the solid electrolyte was Li_{5.8}Si_{0.1}P_{0.9}S_{4.5}O_{0.2}ClBr_{0.3}.

### [Embodiment 4: Preparation of Li_{5.7}Si_{0.1}P_{0.9}S_{4.4}O_{0.2}ClBr_{0.4}]

Preparation was carried out under the same conditions as in the embodiment 1 except that the ratio of the starting materials was changed so that the composition of the solid electrolyte was Li_{5.7}Si_{0.1}P_{0.9}S_{4.4}O_{0.2}ClBr_{0.4}.

### [Embodiment 5: Preparation of Li_{5.6}Si_{0.1}P_{0.9}S_{4.3}O_{0.2}ClBr_{0.5}]

Preparation was carried out under the same conditions as in the embodiment 1 except that the ratio of the starting materials was changed so that the composition of the solid electrolyte was Li_{5.6}Si_{0.1}P_{0.9}S_{4.3}O_{0.2}ClBr_{0.5}.

### [Embodiment 6: Preparation of Li₆Si_{0.1}P_{0.9}S_{4.7}O_{0.2}Cl_{1.1}]

Material synthesis was performed so that the composition of the solid electrolyte was Li₆Si_{0.1}P_{0.9}S_{4.7}O_{0.2}Cl_{1.1}. The same Li₂S, P₂S₅, and LiCl as in the comparative example 1 were used as starting materials, and SiO₂ was additionally used.

The starting materials were put into a milling container and mixed uniformly by performing mixing at 350 rpm for 2 hours or more. After recovered, the mixture was processed into pellets through compression with a hydraulic press, then placed in a quartz tube and sealed in a vacuum state for heat treatment in a vacuum atmosphere. The temperature was raised to 550°C at a heating rate of 2°C per minute, maintained for 18 hours, and then cooled naturally.

Then, the heat-treated pellet sample was pulverized to obtain a powdered solid electrolyte according to the embodiment 6.

### [Embodiment 7: Preparation of Li_{5.9}Si_{0.1}P_{0.9}S_{4.6}O_{0.2}Cl_{1.2}]

Preparation was carried out under the same conditions as in the embodiment 6 except that the ratio of the starting materials was changed so that the composition of the solid electrolyte was Ll_{5.9}Si_{0.1}P_{0.9}S_{4.6}O_{0.2}Cl_{1.2}.

### [Embodiment 8: Preparation of Li_{5.8}Si_{0.1}P_{0.9}S_{4.5}O_{0.2}Cl_{1.3}]

Preparation was carried out under the same conditions as in the embodiment 6 except that the ratio of the starting materials was changed so that the composition of the solid electrolyte was Li_{5.8}Si_{0.1}P_{0.9}S_{4.5}O_{0.2}Cl_{1.3}.

### [Embodiment 9: Preparation of Li_{5.7}Si_{0.1}P_{0.9}S_{4.4}O_{0.2}Cl_{1.4}]

Preparation was carried out under the same conditions as in the embodiment 6 except that the ratio of the starting materials was changed so that the composition of the solid electrolyte was Li_{5.7}Si_{0.1}P_{0.9}S_{4.4}O_{0.2}Cl_{1.4}.

### [Lattice Constant Change]

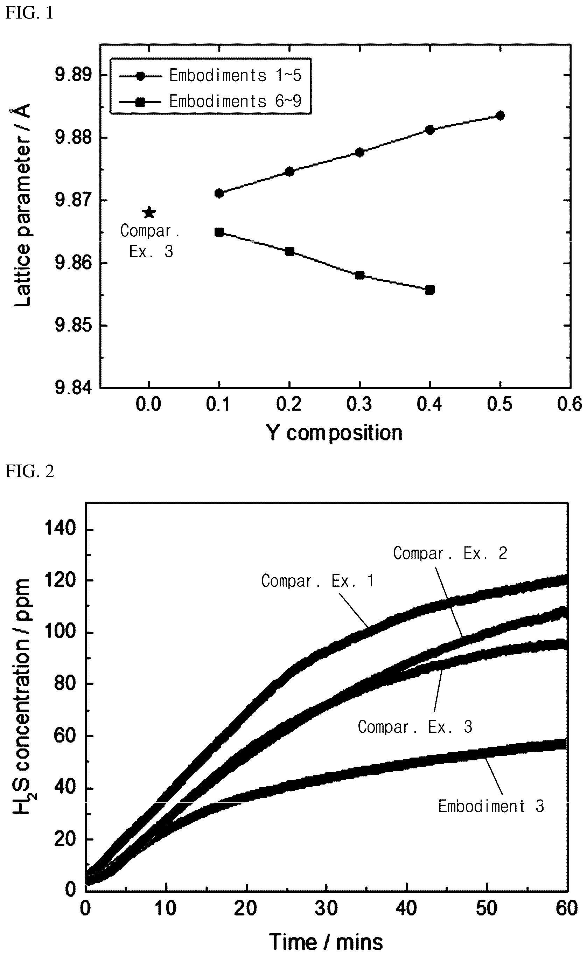

FIG. 1 is a graph showing lattice constants calculated from XRD patterns of solid electrolytes according to embodiments and comparative examples. Here, FIG. 1 is a graph showing Table 2, which is a result derived by calculating the lattice constant of LiₐM_{b}P_{c}S_{d}OₑX_{f} from the XRD pattern.

**[Table 2]**

| | Lattice constant (Å) |
|---|---|
| Compar. Ex. 1 | 9.8490 |
| Compar. Ex. 2 | 9.8774 |
| Compar. Ex. 3 | 9.8681 |
| Embodiment 1 | 9.8712 |
| Embodiment 2 | 9.8746 |
| Embodiment 3 | 9.8777 |
| Embodiment 4 | 9.8813 |
| Embodiment 5 | 9.8836 |
| Embodiment 6 | 9.8650 |
| Embodiment 7 | 9.8619 |
| Embodiment 8 | 9.8581 |
| Embodiment 9 | 9.8558 |

Referring to FIG. 1 and Table 2, it can be seen that the lattice constant increases as the Br content increases in the embodiments 1 to 5 in which the Br content increases compared to the comparative example 3. Conversely, in the case of the embodiments 6 to 9 in which the Cl content increases, it can be seen that the lattice constant decreases as the Cl content increases.

It can be seen that such an increase or decrease of the lattice constant is an effect in which Br, which has a large ionic radius relative to S, is employed in the structure of the solid electrolyte, or Cl, which has a small ionic radius, is employed in the structure of the solid electrolyte. Therefore, in the solid electrolyte of the present invention, the lattice constant can be adjusted by adjusting the contents of constituent elements.

### [Moisture Stability]

FIG. 2 is a graph showing the generated amount of hydrogen sulfide when solid electrolytes according to embodiments and comparative examples are exposed to the atmosphere. Here, FIG. 2 is a graph showing Table 3, which is a result of measuring the generated amount of hydrogen sulfide gas from the solid electrolyte when exposed to the atmosphere of 50% moisture RH.

**[Table 3]**

| | Generated amount of hydrogen sulfide gas (ppm) |
|---|---|
| Compar. Ex. 1 | 121 |
| Compar. Ex. 2 | 108 |
| Compar. Ex. 3 | 69 |
| Embodiment 1 | 65 |
| Embodiment 2 | 57 |
| Embodiment 3 | 48 |
| Embodiment 4 | 42 |
| Embodiment 5 | 38 |
| Embodiment 6 | 40 |
| Embodiment 7 | 30 |
| Embodiment 8 | 29 |
| Embodiment 9 | 29 |

Referring to FIG. 2 and Table 3, it can be seen that the generated amount of hydrogen sulfide gas is significantly reduced in the embodiments 1 to 9 compared to the comparative examples 1 to 3. In particular, it can be seen that the generated amount of hydrogen sulfide gas decreases as the contents of Cl and Br increase.

Therefore, it can be seen that the solid electrolytes according to the embodiments 1 to 9 are effective in inhibiting the generation of hydrogen sulfide gas.

### [Activation Energy]

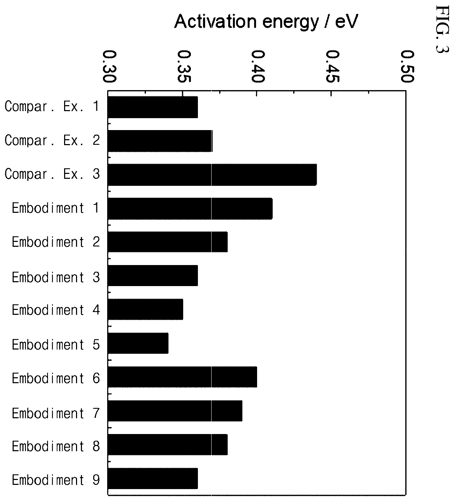

FIG. 3 is a graph showing activation energies of solid electrolytes according to embodiments and comparative examples. Here, FIG. 3 is a graph showing Table 4, which is a result derived by calculating the activation energy from the impedance change according to the temperature change.

**[Table 4]**

| | Activation energy (eV) |
|---|---|
| Compar. Ex. 1 | 0.36 |
| Compar. Ex. 2 | 0.37 |
| Compar. Ex. 3 | 0.44 |
| Embodiment 1 | 0.41 |
| Embodiment 2 | 0.38 |
| Embodiment 3 | 0.36 |
| Embodiment 4 | 0.35 |
| Embodiment 5 | 0.34 |
| Embodiment 6 | 0.4 |
| Embodiment 7 | 0.39 |
| Embodiment 8 | 0.38 |
| Embodiment 9 | 0.36 |

Referring to FIG. 3 and Table 4, the solid electrolytes according to the embodiments 1 to 9 have activation energies of 0.34 to 0.41 eV. It can be seen that the activation energy is lowered in the embodiments 1 to 9 compared to the comparative example 3. That is, it can be seen that the composition of the solid electrolyte according to the embodiments 1 to 9 is effective in improving activation energy.

It is judged that the ionic conductivity of the solid electrolytes according to the embodiments 1 to 9 will be improved by such improvement in activation energy.

### [Ionic Conductivity]

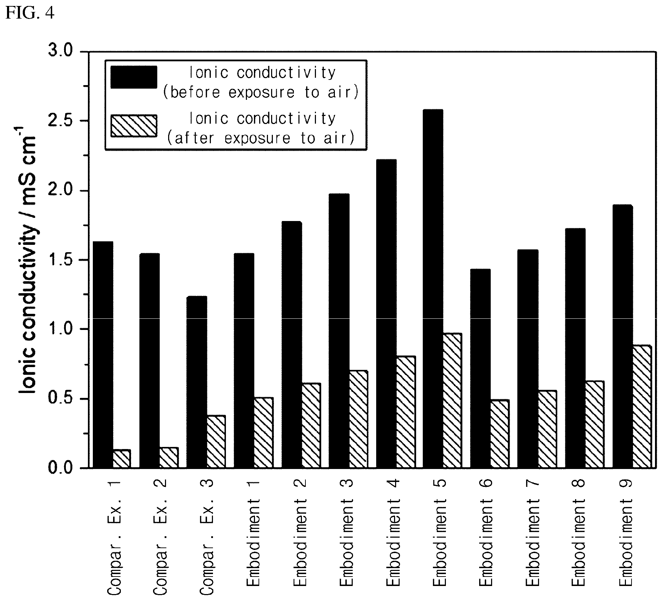

FIG. 4 is a graph showing changes in ionic conductivity of solid electrolytes according to embodiments and comparative examples before and after exposure to the atmosphere. Here, FIG. 4 is a graph showing Table 5, which is the result of measuring the ionic conductivity at room temperature.

**[Table 5]**

| | Ionic conductivity (mS/cm) | |
|---|---|---|
| | Before exposure to the atmosphere | After exposure to the atmosphere |
| Compar. Ex. 1 | 1.63 | 0.13 |
| Compar. Ex. 2 | 1.54 | 0.15 |
| Compar. Ex. 3 | 1.23 | 0.38 |
| Embodiment 1 | 1.54 | 0.51 |
| Embodiment 2 | 1.77 | 0.61 |
| Embodiment 3 | 1.97 | 0.7 |
| Embodiment 4 | 2.22 | 0.81 |
| Embodiment 5 | 2.58 | 0.97 |
| Embodiment 6 | 1.43 | 0.49 |
| Embodiment 7 | 1.57 | 0.56 |
| Embodiment 8 | 1.72 | 0.63 |
| Embodiment 9 | 1.89 | 0.88 |

Referring to FIG. 4 and Table 5, it can be seen that the ionic conductivity of the solid electrolytes according to the embodiments 1 to 9 is 1.54 to 2.58 mS/cm before exposure to the atmosphere and 0.49 to 0.97 mS/cm after exposure to the atmosphere at room temperature.

First, a comparison of the ionic conductivity of the solid electrolytes according to embodiments and comparative examples before exposure to the atmosphere is as follows.

It can be seen that the ionic conductivity of all the embodiments 1 to 9 is increased compared to the comparative example 3. It can be seen that the ion conductivity is the highest as 2.58 mS/cm in the embodiment 5.

Therefore, it can be seen that the solid electrolytes according to the embodiments 1 to 9 have improved ionic conductivity. Also, it can be seen that some embodiments, that is, the embodiments 2 to 5 and 8 to 9 exhibit higher ionic conductivity than the comparative example 1.

It is judged that the improvement of the ionic conductivity of the solid electrolyte according to the embodiments 1 to 9 before exposure to the atmosphere is also related to the improvement of the activation energy.

Next, the change in ionic conductivity before and after exposure to the atmosphere is as follows.

It can be seen that the embodiments 1 to 9 show a lower decrease in ionic conductivity after exposure to the atmosphere than the comparative examples 1 to 3. That is, it can be seen that the compositions of the solid electrolytes according to the embodiments 1 to 9 are effective in improving the ionic conductivity after exposure to the atmosphere.

It is judged that the improvement in ionic conductivity of the solid electrolytes according to the embodiments 1 to 9 after exposure to the atmosphere is also related to the reduction in the generated amount of hydrogen sulfide gas.

Therefore, it can be seen that the solid electrolytes of the embodiments 1 to 9 maintain an azirodite structure and have improved ionic conductivity and improved water stability, so it is an effective technology for realizing large-area and mass-production performance through the improved manufacturing processability of the solid-state battery.

Meanwhile, the embodiments disclosed in this specification and drawings are only presented as specific examples to aid understanding, and are not intended to limit the scope of the present invention. In addition to the embodiments disclosed herein, it is obvious to those skilled in the art that other modifications based on the technical idea of the present invention can be implemented.

## Claims

1. A solid electrolyte for a solid-state battery comprising an oxysulfide-based compound represented by the following chemical formula.
[Chemical Formula] LiₐM_{b}P_{c}S_{d}OₑX_{f}
(5≤a≤7, 0<b≤1, 0≤c<1, 2.5≤d≤5, 0<e≤2 and 1<f≤1.5,
M is one or more selected from the group consisting of Si, Ti, Ta, Nb, As, Sb, Sn and Al, and
X is one or more selected from the group consisting of Cl, Br, I and F.)

2. The solid electrolyte of claim 1, wherein the oxysulfide-based compound includes an argyrodite crystal structure.

3. The solid electrolyte of claim 1, wherein the M is Si, and
the X includes Cl and optionally further includes Br.

4. The solid electrolyte of claim 3, wherein a content of Cl is higher than a content of Br.

5. The solid electrolyte of claim 4, wherein the X includes Cl and Br, and
within the content of the X, a lattice constant of the oxysulfide-based compound increases as the content of Cl is constant and the content of Br increases.

6. The solid electrolyte of claim 1, wherein when the X is Cl, a lattice constant of the oxysulfide-based compound decreases as a content of Cl increases.

7. The solid electrolyte of claim 1, wherein a, b, c, d, and e are 5.6≤a≤6, 0.1≤b≤0.3, 0.7≤c<1, 4≤d≤5,0<e≤0.6, and 1<f≤1.5, respectively.

8. The solid electrolyte of claim 1, wherein compared to a solid electrolyte of Li₂M_{b}P_{c1}S_{d}OₑX (0≤c1≤1), the oxysulfide-based compound has a higher ionic conductivity after exposure to atmosphere.

9. A solid-state battery comprising an oxysulfide-based compound represented by the following chemical formula.
[Chemical Formula] LiₐM_{b}P_{c}S_{d}OₑX_{f}
(5≤a≤7, 0<b≤1, 0≤c<1, 2.5≤d≤5, 0<e≤2 and 1<f≤1.5,
M is one or more selected from the group consisting of Si, Ti, Ta, Nb, As, Sb, Sn and Al, and
X is one or more selected from the group consisting of Cl, Br, I and F.)
